# EUROPEAN PATENT APPLICATION

(11) **EP 4 501 442 A1**
(43) Date of publication of application: **05.02.2025**
(21) Application number: 24171154.8
(22) Date of filing: 18.04.2024
(51) Int. Cl.: B01F 23/50, B01F 23/53, B01F 35/212, B01F 35/22, B01F 35/221

(54) **METHOD AND DEVICE FOR STIRRING APPARATUS CONTROL BASED ON TORQUE FEEDBACK**

(30) Priority: 01.08.2023 CN 202310956276
(71) Applicant: Highsun Technology Co., Ltd., Hangzhou Zhejiang (CN)
(72) Inventor: Zhonghe, Miao, Hangzhou (CN); Tingting, Wang, Hangzhou (CN); Shaoyong, Zheng, Hangzhou (CN)
(74) Representative: Monteiro Alves, Inês

(57) **Abstract**

The present invention discloses a stirring device control method based on torque feedback, comprising the following steps: S100: presetting torque limit value Tmax, initial speed V0, and n gradually increasing target speeds (V1, V2, ..., Vn) in the control unit of the frequency converter, where V1<V0<Vn, and Tmax is less than the maximum torque of the drive motor; S200: controlling the drive motor to start rotating at V0; S300: obtaining the real-time torque value T, and adjusting the working speed to a level that makes the corresponding real-time torque value T less than and close to Tmax based on the comparison result between T and Tmax. Also disclosed is a stirring device capable of implementing the above control method. By applying the present invention, stirring can be performed at the maximum achievable speed while ensuring that the real-time torque value does not exceed Tmax, thereby improving stirring efficiency.

## Description

### Technical Field

The present invention relates to the technical field of stirring equipment, specifically to a method and device for stirring apparatus control based on torque feedback.

### Background Technology

In various fields such as new energy batteries, food, medicine, and chemical industry, there is a large demand for mixing powders and liquids to produce slurries. Generally, existing technologies utilize stirring apparatus to mix and produce final slurry products. During the stirring process of the powder and liquid mixture, as the stirring progresses, the morphology of the mixture gradually transforms into a glossy and delicate slurry. Therefore, at different time intervals, the viscosity of the mixture changes. Some slurries gradually increase in viscosity during the stirring process, resulting in increased resistance encountered by the stirring blades, while others gradually decrease in viscosity, resulting in a corresponding decrease in resistance encountered by the stirring blades. Consequently, some slurries require timely reduction of speed during stirring to prevent premature wear of the drive motor due to excessive resistance, while others require timely increase in speed to improve stirring efficiency.

In existing technologies, the control of the drive motor is generally achieved through a frequency converter, which then controls the speed of the stirring blades. Typically, the speed sensorless vector control mode of the frequency converter is used for control. This approach requires comprehensive consideration of parameters such as the capacity, pole number, rated current, rated voltage, and rated power of the drive motor, making tuning complex and prone to errors. Moreover, in practical applications, to prevent the occurrence of continuous current output due to constant speed increases, multiple overload phenomena and consequent shutdowns may occur during a single stirring process, not only affecting the progress of stirring work but also impacting the service life of the drive motor. Additionally, vector control requires high computational power and processing speed, imposing stringent requirements on the performance indicators of the drive motor and resulting in high procurement costs.

### About the invention

The present invention aims to solve one of the technical problems in the related technology to a certain extent. To this end, the present invention provides a method and device for stirring apparatus control based on torque feedback.

In order to achieve the above object, the present invention adopts the following technical solution: a method for controlling a stirring apparatus based on torque feedback, wherein the stirring apparatus includes a drive motor and a frequency converter electrically connected to the drive motor, and the frequency converter has a control unit. The control method includes the following steps:
S100: presetting a torque upper limit value Tmax, an initial speed V0, and n gradually increasing target speeds (V1, V2, ..., Vn) in the control unit of the frequency converter, where V1<V0<Vn, and Tmax is less than the maximum torque of the drive motor;
S200: controlling the drive motor to start rotating at V0 as the working speed;
S300: obtaining the real-time torque value T according to the feedback of the frequency converter, comparing T with Tmax, and adjusting the working speed to make the real-time torque value T corresponding to it less than and approach Tmax based on the comparison result of T and Tmax.

The application of the present invention has the following beneficial effects: By applying the V/F speed control mode of the frequency converter, utilizing its ability to control the speed of the drive motor in inverse proportion to the torque, pre-setting the torque upper limit value, initial speed, and target speed in the control unit of the frequency converter, and adjusting the working speed according to the real-time torque value and the torque upper limit value, it is possible to ensure stirring at the maximum speed achievable while guaranteeing that the real-time torque value does not exceed Tmax, thereby improving stirring efficiency. The operation of this solution is simple, requires low performance requirements for the drive motor, has corresponding low procurement costs, and can prevent the occurrence of overload phenomena, thus prolonging the service life of the drive motor without affecting the progress of stirring work.

Optionally, adjusting the working speed to make the real-time torque value T less than and approach Tmax based on the comparison result of T and Tmax includes the following steps:
S400: if T>Tmax, then proceed to step S500; if T<Tmax, then proceed to step S600;
S500: reduce the working speed to the nearest target speed, and after running at the reduced working speed for a set time, proceed to step S510.
S510: Obtain the real-time torque value T according to the feedback of the frequency converter, compare T with Tmax, if T > Tmax, proceed to step S500; if T < Tmax, proceed to step S520.
S520: Continue operating at the working speed for a set time, then proceed to step S510.
S600: Increase the working speed to the nearest target speed. After the adjustment, operate at the new working speed for a set time, then proceed to step S300.

If T < Tmax is initially determined, increase the working speed to the nearest target speed. Until T is greater than Tmax, continuously perform step S600 to adjust the working speed to the corresponding value where T exceeds the torque upper limit. Subsequently, proceed to step S500. By utilizing steps S500 to S520, the working speed is first reduced to a value where T is less than the torque upper limit. As the working speed corresponding to T has just transitioned from above the torque upper limit to below it, it can be considered to be less than and approaching the torque upper limit. At this point, the corresponding working speed is the maximum speed that can be achieved (if the speed is increased by one more gear, T will exceed the torque upper limit). Subsequently, as the mixing operation progresses, the form of the slurry will change, and the real-time torque value T will also change. Therefore, a comparison and judgment between T and the torque upper limit will be performed again.

Optionally, after performing step S520 m times, if T < Tmax, proceed to step S600. For certain slurries, as stirring progresses, their viscosity gradually decreases, resulting in reduced resistance encountered by the stirring blades and a corresponding decrease in the real-time torque value T. Therefore, after performing step S520 m times, T may significantly decrease to a value much lower than Tmax, which could affect stirring efficiency. By limiting the number of times step S520 is performed, if T continues to be less than the torque upper limit after m iterations, proceed to step S600 to increase the speed, followed by reassessment.

Optionally, m is a selected value between 3 and 12.

Optionally, the set time is a selected value between 1 minute and 3 minutes.

Optionally, in step S100, the torque lower limit value Tmin is preset in the control unit of the frequency converter, where Tmin < Tmax;

In step S400, if T < Tmax, compare T with Tmin. If Tmin < T < Tmax, proceed to step S600; if T < Tmin, proceed to step S700.

S700: Set the target speed Vp closest to and greater than the current working speed as V (p+q). Increase the working speed to V (p+q). After the adjustment, operate at the new working speed for a set time, then repeat step S400. Here, p ≥ 2, p+q < n, and q is a selected value between 1 and 3.

By setting the torque lower limit value, when T is less than the torque lower limit, it can be inferred that the stirring speed is too low. To enhance stirring efficiency, a substantial increase in stirring speed is required. Therefore, step S700 is performed accordingly to directly adjust the working speed to V (p+q).

Optionally, the torque lower limit value Tmin is a selected value between 20 N·m and 200 N·m.

Optionally, the torque upper limit value Tmax is a selected value between 80 N·m and 800 N·m.

Optionally, the initial speed V0 is a selected value between 840 rpm and 1680 rpm, n is a selected value between 5 and 12, V1 is a selected value between 140 rpm and 420 rpm, and Vn is a selected value between 1400 rpm and 2240 rpm.

In addition, the present invention also provides a stirring device based on torque feedback, comprising: a tank body forming an accommodating cavity internally; stirring blades extending into the accommodating cavity and used for stirring the slurry deposited therein; a driving motor for rotating the stirring blades; and a frequency converter electrically connected to the driving motor. The frequency converter has a control unit configured to execute any one of the stirring device control methods based on torque feedback as described above. The beneficial effects of the stirring device provided by the present invention and the reasoning process of the control method described above are similar and will not be repeated here.

The features and advantages of the present invention will be disclosed in detail in the following specific embodiments and accompanying drawings. The best embodiments or means of the present invention will be described in detail in conjunction with the drawings, but are not limited to the technical solutions of the present invention. Additionally, the features, elements, and components appearing in each subsequent text and drawing are multiple and are marked with different symbols or numbers for convenience of representation, but all represent components with the same or similar structure or function.

### Description of drawings

The present invention will be further described below in conjunction with the accompanying drawings:

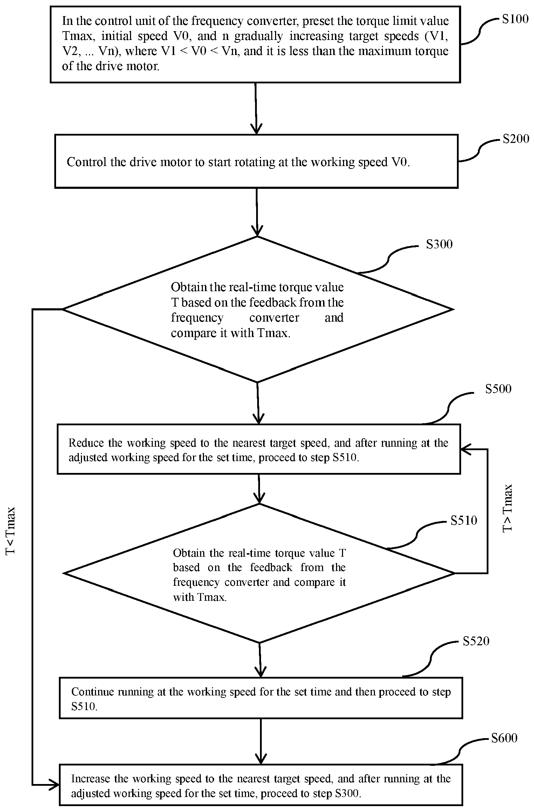

Figure 1 is a flowchart illustrating a stirring device control method based on torque feedback provided in an embodiment of the present invention.

### Specific Embodiment

The following describes specific embodiments of the present invention, wherein exemplary embodiments are illustrated in the accompanying drawings, and identical or similar references throughout denote identical or similar elements or components with the same or similar functions. Embodiments described herein are intended to explain the present invention and should not be construed as limiting the invention.

The term "an embodiment" or "example" or "instance" as used herein refers to one or more embodiments or examples incorporating specific features, structures, or characteristics described in conjunction with the embodiment itself, which may be included in at least one embodiment disclosed in the present application. The phrase "in one embodiment" appearing at various locations in the specification does not necessarily all refer to the same embodiment.

Embodiment 1: This embodiment provides a stirring device control method based on torque feedback. The stirring device includes a driving motor and a frequency converter electrically connected to the driving motor. The frequency converter has a control unit. As shown in Figure 1, the control method includes the following steps:
S100: presetting a torque upper limit value Tmax, an initial speed V0, and n gradually increasing target speeds (V1, V2, ..., Vn) in the control unit of the frequency converter, where V1<V0<Vn, and Tmax is less than the maximum torque of the drive motor;
S200: controlling the drive motor to start rotating at V0 as the working speed;
S300: obtaining the real-time torque value T according to the feedback of the frequency converter, comparing T with Tmax, and adjusting the working speed to make the real-time torque value T corresponding to it less than and approach Tmax based on the comparison result of T and Tmax.

The inventors refer to this method as the "torque feedback step-speed control mode". By pre-setting parameters and control procedures in the control unit of the frequency converter, and applying the V/F speed control mode of the frequency converter, which controls the speed of the driving motor in inverse proportion to the torque, the working speed is adjusted based on real-time torque values and the torque upper limit. Consequently, stirring is performed at the maximum achievable speed while ensuring that the real-time torque value does not exceed Tmax, thereby enhancing stirring efficiency. This approach is easy to operate, requires low performance from the driving motor, has low procurement costs, prevents overload, extends the service life of the driving motor, and does not affect the stirring operation.

Specifically, the working speed is adjusted based on the comparison result between T and Tmax to ensure that the corresponding real-time torque value T is less than Tmax and approaches Tmax, including the following steps:
S400: if T>Tmax, then proceed to step S500; if T<Tmax, then proceed to step S600;
S500: reduce the working speed to the nearest target speed, and after running at the reduced working speed for a set time, proceed to step S510.
S510: Obtain the real-time torque value T according to the feedback of the frequency converter, compare T with Tmax, if T > Tmax, proceed to step S500; if T < Tmax, proceed to step S520.
S520: Continue operating at the working speed for a set time, then proceed to step S510.
S600: Increase the working speed to the nearest target speed. After the adjustment, operate at the new working speed for a set time, then proceed to step S300.

If T < Tmax is initially determined, increase the working speed to the nearest target speed. Until T is greater than Tmax, continuously perform step S600 to adjust the working speed to the corresponding value where T exceeds the torque upper limit. Subsequently, proceed to step S500. By utilizing steps S500 to S520, the working speed is first reduced to a value where T is less than the torque upper limit. At this point, the working speed corresponds to the maximum achievable speed (as increasing the speed further would exceed Tmax). As the stirring operation progresses, the morphology of the slurry changes, leading to variations in the real-time torque value T. Therefore, subsequent comparisons between T and Tmax will be necessary.

Furthermore, after performing step S520 m times, if T < Tmax, proceed to step S600. For certain slurries, as stirring progresses, their viscosity gradually decreases, resulting in reduced resistance encountered by the stirring blades and a corresponding decrease in the real-time torque value T. Therefore, after performing step S520 m times, T may significantly decrease to a value much lower than Tmax, affecting stirring efficiency. By limiting the number of times step S520 is performed, if T continues to be less than the torque upper limit after m iterations, proceed to step S600 to increase the speed, followed by reassessment.

Taking the experiment of preparing negative electrode graphite slurry products as an example, the powder to be added for preparing negative electrode graphite slurry products is MAG-TL3 negative electrode main material, and the liquid is CMC glue solution, with respective amounts of MAG-TL3 negative electrode main material (15kg) and CMC glue solution (10.3kg/pure 1.5kg). Applying the control method to control the stirring device for stirring operation, presetting torque limit value, initial speed, target speed, setting time, and the value of m, six stirring operations are conducted as the experimental group. The stirring scheme using vector control, which is commonly adopted in the existing technology, is used as the control group, with the same initial speed. Among them, the target speeds for the six groups are set as follows: the first group (140, 280, 560, 700, 980, 1400, 1820); the second group (140, 280, 560, 700, 980, 1400); the third group (336, 616, 896, 1176, 1456, 1736); the fourth group (420, 700, 980, 1260, 1540); the fifth group (420, 700, 980, 1260, 1540, 1820); the sixth group (420, 840, 1120, 1400, 1680, 1960, 2240). The experimental results are shown in the table below:

| | Tmax(N.m) | Vo(rpm) | Setting Time(min) | m (times) | Mixing Duration (min) | Midway Overload Shutdowns |
|---|---|---|---|---|---|---|
| Experimental Group | 80 | 840 | 1 | 3 | 180 | 0 |
| Control Group | - | 840 | - | - | 200 | 0 |
| Experimental Group | 180 | 980 | 3 | 5 | 165 | 0 |
| Control Group | - | 980 | - | - | 190 | 0 |
| Experimental Group | 240 | 1120 | 1 | 6 | 160 | 0 |
| Control Group | - | 1120 | - | - | 180 | 0 |
| Experimental Group | 400 | 1260 | 2 | 8 | 155 | 0 |
| Control Group | - | 1260 | - | - | 210 | 1 |
| Experimental Group | 550 | 1400 | 2 | 10 | 140 | 0 |
| Control Group | - | 1400 | - | - | 240 | 2 |
| Experimental Group | 680 | 1680 | 1.5 | 12 | 145 | 0 |
| Control Group | - | 1680 | - | - | 270 | 3 |

Through the above experiments, it can be seen that under the conditions of setting the initial speed V0 between 840rpm and 1680rpm, V1 between 140rpm and 420rpm, Vn between 1400rpm and 2240rpm, torque limit value Tmax between 80N.m and 800N.m, setting time between Imin and 3min, and m between 3 and 12, the stirring efficiency can be improved by applying the control method provided in this application to control the stirring device for stirring operation.

Additionally, it should be noted that the number of set working speeds in the above experiments is 5, 6, or 7. In other embodiments, more numbers can be set according to needs. More target speeds can make the adjustment of working speed more precise. It is also understood that the number of target speeds cannot be too many, otherwise multiple adjustments of target speeds may be needed to adjust the corresponding real-time torque value to meet the requirements. Therefore, the generally set value of n is between 5 and 12.

When applying the control method provided in this embodiment, the stirring device can be an existing stirring device in the prior art, and it only needs to be improved. Existing stirring devices generally include the following components: tank body, stirring blade, drive motor, and frequency converter, wherein the tank body forms an inner cavity, the stirring blade extends into the inner cavity and is used for stirring the slurry fed into the inner cavity, the drive motor is used to drive the stirring blade to rotate, and the frequency converter is electrically connected to the drive motor. The improvement lies in that the control unit of the frequency converter is pre-set with parameter values and control programs, specifically, by pre-setting the parameter values and control programs, the control unit can execute the control method provided in this embodiment.

Embodiment 2: This embodiment also provides a stirring device control method based on torque feedback, the difference between this embodiment and the first embodiment lies in that, in step S100, the minimum torque value Tmin is preset in the control unit of the frequency converter, Tmin < Tmax;

Thereafter, in step S400, if T < Tmax, T is compared with Tmin, if Tmin < T < Tmax, step S600 is performed; if T < Tmin, step S700 is performed.

S700: Set the target speed Vp closest to and greater than the current working speed as V (p+q). Adjust the working speed to V (p+q). After the adjustment, operate at the new working speed for a period of time, then repeat step S400. Here, p ≥ 2, p+q < n, and q is a selected value between 1 and 3.

By setting the torque lower limit value, when T is less than the torque lower limit, it can be inferred that the stirring speed is too low. To enhance stirring efficiency, a substantial increase in stirring speed is required. Therefore, step S700 is performed accordingly to directly adjust the working speed to V (p+q).

Taking the six experimental groups in embodiment 1 as the control group, six experimental groups are correspondingly set up, with the same torque limit value, initial speed, target speed, setting time, and m value. The control method provided in this embodiment is applied to the experimental groups, with the addition of torque lower limit values and q values. The experimental results are shown in the table below:

| | Tmax(N.m) | Vo(rpm) | Setting Time(min) | m (times) | Tmax(N.m) | q | Mixing Duration (min) |
|---|---|---|---|---|---|---|---|
| Experimental Group | 80 | 840 | 1 | 3 | 20 | 3 | 155 |
| Control Group | 80 | 840 | 1 | 3 | - | - | 180 |
| Experimental Group | 180 | 980 | 3 | 5 | 50 | 1 | 150 |
| Control Group | 180 | 980 | 3 | 5 | - | - | 165 |
| Experimental Group | 240 | 1120 | 1 | 6 | 75 | 1 | 155 |
| Control Group | 240 | 1120 | 1 | 6 | - | - | 160 |
| Experimental Group | 400 | 1260 | 2 | 8 | 120 | 2 | 140 |
| Control Group | 400 | 1260 | 2 | 8 | - | - | 155 |
| Experimental Group | 550 | 1400 | 2 | 10 | 160 | 1 | 135 |
| Control Group | 550 | 1400 | 2 | 10 | - | - | 140 |
| Experimental Group | 680 | 1680 | 1.5 | 12 | 200 | 1 | 135 |
| Control Group | 680 | 1680 | 1.5 | 12 | - | - | 145 |

Through the above experiments, it can be seen that under the conditions of setting the initial speed V0 between 840rpm and 1680rpm, V1 between 140rpm and 420rpm, Vn between 1400rpm and 2240rpm, torque limit value Tmax between 80N.m and 800N.m, setting time between Imin and 3min, m between 3 and 12, Tmin between 20N.m and 200N.m, and q between 1 and 3, the stirring efficiency can be further improved by applying the control method provided in this application to control the stirring device for stirring operation.
The above are only specific embodiments of the invention, but the scope of the invention is not limited thereto. Those skilled in the art should understand that the invention includes, but is not limited to, the contents described in the drawings and the specific embodiments described above. Any modifications deviating from the function and structural principles of the present invention will be included in the scope of the claims.

## Claims

1. A stirring device control method based on torque feedback, wherein the stirring device comprises a drive motor and a frequency converter electrically connected to the drive motor, the frequency converter having a control unit, **characterized in that** the control method comprises the following steps:
S100: presetting a torque upper limit value Tmax, an initial speed V0, and n gradually increasing target speeds (V1, V2, ..., Vn) in the control unit of the frequency converter, where V1<V0<Vn, and Tmax is less than the maximum torque of the drive motor;
S200: controlling the drive motor to start rotating at V0 as the working speed;
S300: obtaining the real-time torque value T according to the feedback of the frequency converter, comparing T with Tmax, and adjusting the working speed to make the real-time torque value T corresponding to it less than and approach Tmax based on the comparison result of T and Tmax.

2. The stirring device control method based on torque feedback as claimed in claim 1, wherein adjusting the working speed to a level that makes the corresponding real-time torque value T less than and close to Tmax based on the comparison result between T and Tmax comprises the following steps:
S400: if T>Tmax, then proceed to step S500; if T<Tmax, then proceed to step S600;
S500: reduce the working speed to the nearest target speed, and after running at the reduced working speed for a set time, proceed to step S510.
S510: Obtain the real-time torque value T according to the feedback of the frequency converter, compare T with Tmax, if T > Tmax, proceed to step S500; if T < Tmax, proceed to step S520.
S520: Continue operating at the working speed for a set time, then proceed to step S510.
S600: Increase the working speed to the nearest target speed. After the adjustment, operate at the new working speed for a set time, then proceed to step S300.

3. The stirring device control method based on torque feedback as claimed in claim 2, wherein in step S510 performed after m times in step S520, if T<Tmax, step S600 is performed.

4. The stirring device control method based on torque feedback as claimed in claim 3, wherein m is a selected value between 3 and 12.

5. The stirring device control method based on torque feedback as claimed in any one of claims 2 to 4, **characterized in that** the setting time is a selected value between Imin and 3min.

6. The stirring device control method based on torque feedback as claimed in claim 2, wherein in step S100, the control unit of the frequency converter also presets the torque lower limit value Tmin, Tmin<Tmax;
In step S400, if T < Tmax, T is compared with Tmin, if Tmin < T < Tmax, step S600 is performed; if T < Tmin, step S700 is performed;
S700: Set the target speed Vp closest to and greater than the current working speed as V (p+q). Adjust the working speed to V (p+q). After the adjustment, operate at the new working speed for a period of time, then repeat step S400. Here, p ≥ 2, p+q < n, and q is a selected value between 1 and 3.

7. The stirring device control method based on torque feedback as claimed in claim 6, wherein the torque lower limit value Tmin is a selected value between 20N.m and 200N.m.

8. The stirring device control method based on torque feedback as claimed in claim 1 or claim 7, wherein the torque upper limit value Tmax is a selected value between 80N.m and 800N.m.

9. The stirring device control method based on torque feedback as claimed in claim 1, wherein the initial speed V0 is a selected value between 840rpm and 1680rpm, n is a selected value between 5 and 12, V1 is a selected value between 140rpm and 420rpm, and Vn is a selected value between 1400rpm and 2240rpm.

10. A stirring device based on torque feedback, comprising:
A tank body forming an inner cavity;
A stirring blade extending into the inner cavity and used for stirring the slurry fed into the inner cavity;
A drive motor for driving the stirring blade to rotate; and,
A frequency converter electrically connected to the drive motor;
Wherein the frequency converter has a control unit configured to execute the stirring device control method based on torque feedback as claimed in any one of claims 1 to 9.
